**Europäisches Patentamt**

**European Patent Office**

**Office européen des brevets**

(19)

(11) Numéro de publication : **0 469 986 A1**

(12) ## DEMANDE DE BREVET EUROPEEN

(21) Numéro de dépôt : **91402127.4**

(22) Date de dépôt : **30.07.91**

(51) Int. Cl.⁵ : **G06F 15/70**, G06F 15/68, G06K 9/46

(30) Priorité : **31.07.90 FR 9009743**

(43) Date de publication de la demande :
**05.02.92 Bulletin 92/06**

(84) Etats contractants désignés :
**BE DE GB IT NL SE**

(71) Demandeur : **THOMSON-TRT DEFENSE**
**88, rue Brillat-Savarin**
**F-75013 Paris (FR)**

(72) Inventeur : **Dufour, Jean-Yves**
**THOMSON-CSF, SCPI, Cédex 67**
**F-92045 Paris la Défense (FR)**
Inventeur : **Waldburger, Hugues**
**THOMSON-CSF, SCPI, Cédex 67**
**F-92045 Paris la Défense (FR)**

(74) Mandataire : **Turlèque, Clotilde et al**
**THOMSON-CSF SCPI**
**F-92045 PARIS LA DEFENSE CEDEX 67 (FR)**

(54) Procédé et dispositif de caractérisation et de localisation en temps réel de singularités d'une image numérisée, notamment pour la reconnaissance de formes dans un traitement d'analyse de scène.

(57) Les singularités constituant les points caractéristiques de l'image sont des points de contour à forte courbure tels que des coins ou régions de petite taille, l'image étant formée d'une trame bidimensionnelle de pixels présentant chacun un niveau de gris déterminé.

Le dispositif de l'invention comprend : des moyens dérivateurs (10) approximant, pour chaque pixel à analyser, les dérivées partielles d'ordre 2 de la fonction de niveau de gris de l'image ($F(x,y)$) ; des moyens caractérisateurs (23, 30), déterminant à partir de ces dérivées un attribut ($\lambda_2$) représentatif de la caractéristique recherchée et affectant cet attribut au pixel ainsi analysé ; et des moyens localisateurs, recherchant parmi les pixels de l'image ainsi analysés les points maximisant ledit attribut.

Très avantageusement, les moyens dérivateurs (10) comprennent des moyens convolueurs effectuant une convolution de la fonction de niveau de gris de l'image ($F(x,y)$) avec des fonctions correspondant aux dérivées partielles d'ordre 2 d'une fonction de régularisation, cette fonction de régularisation permettant d'atténuer le bruit présent dans l'image.

De préférence, l'attribut choisi est la seconde valeur propre de la matrice des dérivées secondes, et la fonction de régularisation est une fonction gaussienne, notamment une fonction gaussienne centrée.

FIG.4

$$\sqrt{T_1^2 + T_2^2}$$

La présente invention concerne un procédé et un dispositif pour caractériser et localiser en temps réel certaines singularités d'une image numérisée.

L'invention sera principalement décrite dans le cadre d'une application à l'analyse d'une scène dans laquelle on cherche à reconnaître des formes caractéristiques correspondant à des contours à forte courbure, par exemple les angles d'un contour polygonal ou des régions de petite taille.

Une fois ces singularités caractérisées (c'est-à-dire discriminés du reste de l'image, notamment des points de contour voisins) et localisées (c'est-à-dire référencées par leurs coordonnées dans l'image), elles vont constituer des « points caractéristiques » correspondant à des « primitives » de l'image traitée qui pourront se prêter à un certain nombre de traitements tels que par exemple des segmentations d'image (consistant à faire croître une région à partir des « points graines » que forment les points caractéristiques préalablement reconnus) ou pour des applications faisant appel à des techniques de mise en correspondance de points caractéristiques.

Il en est ainsi, par exemple, lorsque l'on cherche à localiser dans un environnement naturel des objets de fabrication humaine (route, ponts, bâtiments, voies ferrées, canaux, etc.) sur des images infrarouge délivrées par une caméra embarquée à bord d'un aéronef, de tels objets apparaissant en général à l'observation sous une forme polygonale. Comme application typique, on peut citer le recalage de navigation de l'aéronef.

Cette application à la reconnaissance de formes n'est cependant pas limitative de la présente invention, qui peut également être utilisée pour d'autres applications nécessitant l'extraction de points caractéristiques, par exemple des applications de stéréovision, d'analyse de mouvement, etc.

De façon générale, si l'on considère l'image comme étant la restriction à $N^2$ d'une fonction mathématique $F(x,y)$ à deux variables et à valeurs réelles, ci-après appelée « fonction de niveau de gris », le principe du procédé consiste à élaborer, à partir de cette fonction F (fonction image brute), une autre fonction permettant de caractériser et de localiser de façon fiable des points caractéristiques de l'image. Cette autre fonction sera désignée sous le terme d'« attribut ».

Il est en effet nécessaire de passer par l'intermédiaire d'un tel attribut, car si l'on se contentait de considérer les points tels que la valeur de la fonction de niveau de gris $F(x,y)$ soit extrémale dans un voisinage de taille plus ou moins importante, il faudrait que les points caractéristiques recherchés correspondent à de simples pics de niveau de gris de l'image, ce qui constitue une hypothèse particulièrement restrictive. En outre, un tel test direct serait extrêmement sensible aux pointes de bruit de l'image.

Ayant donc défini un attribut et calculé la valeur de celui-ci pour tous les pixels de l'image (étape de caractérisation), on retrouve les points caractéristiques (étape de localisation) par application d'un critère simple à cet attribut, par exemple un test de maximalité dans l'ensemble de l'image, dans une sous-image (test local) ou bien dans un voisinage d'un pixel central donné.

Un des premiers types d'attribut proposés a été un attribut statistique, c'est-à-dire un attribut constitué d'un opérateur réalisant en chaque point de l'image une estimation de la variance locale dans des voisinages orientés centrés sur le point traité. On pourra se référer à cet égard aux travaux de H.P. Moravec exposés dans *Towards Automatic Visual Obstacle Avoidance, in Proceedings of the International Joint Conference on Artificial Intelligence (IJCAI), 1977 et de M.J. Hannah, dans Bootstrap Stereo,* in *Proceedings of the Image Understanding Workshop, DARPA Conference,* 1980. Ces techniques sont caractérisées par un volume de calculs très pénalisant pour une mise en oeuvre matérielle.

Une autre approche consiste à utiliser un attribut non plus statistique mais différentiel, c'est-à-dire dans lequel on réalise tout d'abord une approximation du gradient de la fonction du niveau de gris de l'image (c'est-à-dire que l'on calcule le vecteur formé en chaque point par les dérivées partielles de la fonction F), puis à analyser la fonction vectorielle ainsi obtenue.

On va ainsi définir pour chaque pixel une valeur complexe (c'est-à-dire, sous une autre formulation, un vecteur) contenant pour chaque point deux informations, à savoir :

– une mesure de la transition locale des niveaux de gris au voisinage de ce point, représentée par la norme $G(x,y)$ du vecteur gradient $\underline{G}(x,y)$, et

– une estimation de la direction dans laquelle s'effectuer cette transition, représentée par l'argument $\Phi(x,y)$ du vecteur gradient $\underline{G}(x,y)$ ; en cas de présence effective d'un contour au voisinage de ce point, cette direction de gradient sera donc perpendiculaire à la direction du contour.

On peut alors, à partir de la mesure de la transition locale du niveau de gris, extraire les seuls points de contour, c'est-à-dire ne conserver que les points correspondants à des maxima locaux de cette fonction (c'est-à-dire des maxima dans un voisinage V donné, par exemple un voisinage 3 x 3), en ne gardant ainsi que les « lignes de crête » de la fonction de niveau de gris de l'image.

Cette condition peut être formulée de la manière suivante : un point $M(x,y)$ donné est un point de contour si et seulement si la relation suivante est vérifiée:

$$G(x,y) > G(x',y') \ \forall \ (x',y') \in V(x,y) \cap D(x,y),$$

$D(x,y)$ désignant la droite d'orientation $\Phi(x,y)$ et $V(x,y)$ désignant un voisinage donné de $(x,y)$.

L'information de gradient ne peut cependant pas être utilisée directement pour la recherche des points caractéristiques. En effet, un point dont l'amplitude de gradient est localement maximale est nécessairement reconnu comme étant un point de contour, et il est donc délicat de le distinguer de ses voisins situés sur le même contour.

Certaines techniques ont été proposées pour rechercher, après avoir ainsi détecté les points de contour, ceux pour lesquels la variation de la direction du gradient est localement maximale (angle, point de rebroussement, etc.). De telles techniques sont notamment décrites par P.R. *Beaudet dans Rotational Invariant Image Operators, in Proceedings of the International Joint Conference on Pattern Recognition (IJCPR)*, 1978, par L. Kitchen et A. Rosenfeld dans *Gray Level Corner Detection, in Pattern Recognition Letters,* Volume 1, 1982, par D.A. Zuniga et R. Haralick dans *Corner Detection Using the Facet Model,* in *Proceedings of the IEEE Conference on Vision and Pattern Recognition (CVPR),* 1983 et par R.L. Dreschler et H.H. Nagel dans *On the Selection of Critical Points and Local Curvature Extrema of Regions Boundaries for Interframe Matching,* in *Image Sequence Processing and Dynamic Scene Analysis,* T.S. Huang editor, NATO ASI Series, Volume F2, Springer Verlag, 1983,

Ces techniques sont cependant relativement lourdes à mettre en oeuvre, car elles sont toutes basées sur l'utilisation et la combinaison des dérivées partielles d'ordre 1 et 2 de la fonction de niveau de gris de l'image ; il est donc nécessaire de connaître — et donc de calculer — ces dérivées pour tous les pixels de l'image.

Une autre technique d'analyse a été proposée par J.Y. Dufour et H. Waldburger dans *Recalage d'images par association de primitives, construction et analyses d'histogrammes multidimensionnels,* in *Actes du congrès GRETSI,* Antibes 1989.

Dans cette technique, on recherche des points maximisant un critère de radialité locale du champ vectoriel de gradient (ce qui revient plus ou moins à rechercher les centres de courbure du contour aux endroits où cette courbure est la plus forte). On notera que ces points recherchés, qui sont à l'intersection des supports des vecteurs de leurs voisinages, sont des points proches d'un contour mais non situés sur celui-ci.

Cette dernière technique, comme les précédentes, se caractérise cependant par une implantation coûteuse, en termes de nombre de circuits à utiliser.

L'un des buts de l'invention est donc de proposer un traitement particulier, avec une architecture simplifiée adaptée, permettant de réaliser en temps réel ce traitement de caractérisation et de localisation des singularités d'une image numérisée.

On verra en particulier que les traitements effectués ont tous un caractère local, c'est-à-dire que l'analyse d'un pixel donné est effectuée exclusivement en fonction des pixels situés autour de lui dans un voisinage limité. Ceci permet d'aboutir à une relative simplicité du traitement à effectuer, à la différence des procédés de l'art antérieur qui nécessitaient généralement de considérer la globalité de l'image, obligeant ainsi à prévoir une architecture relativement complexe et coûteuse en circuits (mémoires de trame de grande capacité, volume de calculs important, etc.).

On notera également, lorsque l'on exposera en détail l'invention, le caractère adaptatif des traitements vis-à-vis du contenu de l'image ; cette caractéristique permet d'améliorer notablement la qualité de ces traitements.

À cet effet, la présente invention propose un procédé pour caractériser et localiser des points caractéristiques d'une image numérisée, notamment pour la reconnaissance de formes dans un traitement d'analyse de scène, ces points caractéristiques étant des points de contour à forte courbure tels que des coins ou des régions de petite taille, ladite image étant formée d'une trame bidimensionnelle de pixels présentant chacun un niveau de gris déterminé, caractérisé en ce qu'il comprend les étapes consistant à:

(a) approximer, pour chaque pixel à analyser, les dérivées partielles d'ordre 2 de la fonction de niveau de gris de l'image (F(x,y)),

(b) déterminer à partir de ces dérivées un attribut ($\lambda_2$) représentatif de la caractéristique recherchée et affecter cet attribut au pixel ainsi analysé, et

(c) rechercher parmi les pixels de l'image ainsi analysés les points maximisant ledit attribut.

Très avantageusement, ladite approximation est réalisée en convoluant la fonction de niveau de gris de l'image (F(x,y)) avec des fonctions correspondant aux dérivées partielles d'ordre 2 d'une fonction de régularisation, cette fonction de régularisation permettant d'atténuer le bruit présent dans l'image.

L'invention a également pour objet un dispositif constitué des moyens permettant de mettre en oeuvre ces fonctions, et dans lequel la caractérisation et la localisation des points caractéristiques sont alors avantageusement opérées en temps réel à la cadence vidéo.

Avantageusement, ledit attribut est la seconde valeur propre de la matrice desdites dérivées partielles :
$\lambda_2(x,y) = |F_{xx} + F_{xy}| - [(F_{xx} - F_{yy})^2 + 4.F_{xy}^2]^{\frac{1}{2}}$, avec $F_{xx}(x,y) = \partial^2 F/\partial x^2$, $F_{yy}(x,y) = \partial^2 F/\partial y^2$ et $F_{xy}(x,y) = \partial^2 F/\partial x \partial y$.

De façon également avantageuse, ladite fonction de régularisation est une fonction gaussienne, notamment une fonction gaussienne centrée : $G(x,y) = (2.\pi. |\Sigma|^{\frac{1}{2}})^{-1} . \exp[-1/2.(x,y).\Sigma^{-1}. (x,y)^t]$, où $\Sigma$ est la matrice de covariance de la gaussienne.

On va maintenant décrire un mode de mise en oeuvre de l'invention, en référence aux dessins annexés.

La figure 1 est un schéma par blocs illustrant une architecture préférentielle permettant de mettre en oeuvre en temps réel le traitement de l'invention.

La figure 2 illustre schématiquement une première forme de réalisation du circuit convolueur de la figure 1.

La figure 3 illustre une seconde forme de réalisation, plus élaborée, du circuit convolueur de la figure 1.

La figure 4 illustre schématiquement une forme de réalisation du premier circuit de fonction de la figure 1.

La figure 5 illustre schématiquement une forme de réalisation du second circuit de fonction de la figure 1.

## Présentation générale du traitement

Le procédé consiste à traiter une image brute formée d'une trame bidimensionnelle de pixels présentant chacun un niveau de gris déterminé, par exemple l'image délivrée par une caméra vidéo telle qu'une caméra infrarouge air-sol embarquée à bord d'un aéronef.

A partir de cette image brute, on va tout d'abord déterminer pour chaque pixel les dérivées d'ordre deux de la fonction de niveau de gris $F(x,y)$ de l'image analysée (ou une approximation de ces dérivées). On suppose bien entendu que la fonction de niveau de gris $F(x,y)$ est deux fois différentiable.

Ces dérivées secondes peuvent être présentées sous forme matricielle (hessienne de la fonction) :

les notations utilisées étant les suivantes:

$$F_{xx}(x,y) = \partial^2 F/\partial x^2,$$
$$F_{yy}(x,y) = \partial^2 F/\partial y^2, \text{ et } H(x,y) = \begin{pmatrix} F_{xx}(x,y) & F_{xy}(x,y) \\ F_{xy}(x,y) & F_{yy}(x,y) \end{pmatrix},$$
$$F_{xy}(x,y) = \partial^2 F/\partial x\partial y.$$

L'idée de départ de la présente invention consiste à utiliser un attribut basé sur l'approximation en chaque point de la fonction constituée par la seconde valeur propre de la hessienne $H(x,y)$ de la fonction $F(x,y)$, qui est :

$$\lambda_2(x,y) = |F_{xx} + F_{xy}| - [(F_{xx}-F_{yy})^2 + 4.F_{xy}^2]^{\frac{1}{2}}$$

Le choix de la seconde valeur propre correspond à un placement dans une direction orthogonale à celle où $F_{xx}$ est maximale, c'est-à-dire dans un repère relatif où la variation en x est la plus marquée.

L'approximation directe des dérivées partielles de la fonction image se révèle cependant le plus souvent insuffisante pour obtenir des résultats satisfaisants dans les applications habituellement envisagées.

En effet, outre la grande sensibilité au bruit de tels opérateurs, le voisinage utilisé pour l'approximation est très restreint, et l'information extraite possède donc un caractère local trop marqué.

Pour pallier cet inconvénient, la présente invention propose d'opérer non pas sur l'image originelle (fonction $F(x,y)$), mais sur une image modifiée (fonction $F'(x,y)$) obtenue en convoluant l'image originelle avec une fonction « de régularisation » $G(x,y)$ appropriée.

On aura ainsi:

$$F'(x,y) = (F*G)(x,y)$$

La fonction de régularisation doit bien entendu être positive, intégrable et au moins deux fois continûment différentiable.

Dans le cas général, on peut adopter par exemple pour cette fonction G une fonction gaussienne centrée :

$$G(x,y) = (2.\pi.|\Sigma|^{\frac{1}{2}})^{-1}.\exp[-1/2.(x,y).\Sigma^{-1}.(x,y)^t]$$

$\Sigma$ étant la matrice de covariance de cette fonction (qui peut être diagonale ou non).

On notera que ce type de fonction n'est pas limitatif de l'invention, et que l'on peut utiliser également dans le même but d'autres fonctions de régularisation, qui peuvent être des fonctions gaussiennes ou non, et des fonctions gaussiennes isotropes ou non.

Si la fonction G est convenablement choisie (ce qui est le cas de la fonction gaussienne ci-dessus), l'opération de convolution apporte deux avantages.

En premier lieu, elle « régularise » l'image, c'est-à-dire qu'elle en atténue le bruit et qu'elle en arrondit les contours anguleux.

En second lieu, elle facilite les opérations de dérivation (très lourdes du point de vue du volume des calculs, donc de la complexité des circuits à utiliser) ; en effet, on peut remarquer que :

$$\partial^n/\partial x^i\partial y^{n-i}(F*G) = F*\partial^n/\partial x^i\partial y^{n-i}G.$$

La fonction $\lambda'_2$ que l'on utilisera comme attribut sera alors définie par:

$$\lambda'_2(x,y) = |F*L_G| - [(F*T_{1G})^2 + (F*T_{2G})^2]^{\frac{1}{2}},$$

avec les notations suivantes:

$L_G = G_{xx} + G_{yy}$ (c'est-à-dire le laplacien de la fonction G)

$T_{1G} = G_{xx} - G_{yy}$

$T_{2G} = 2.G_{xy}$

Avec un tel attribut, les points pour lesquels la valeur absolue de $\lambda'_2$ est élevée sont des points situés au voisinage d'un contour de l'image F'présentant une courbure.

En outre, la valeur absolue de $\lambda'_2$ est d'autant plus importante que le contraste local est important et que la courbure est accentuée, ce qui correspond typiquement aux propriétés des points caractéristiques habituellement recherchés.

De plus, les points tels que $\lambda'_2$ est positive sont situés dans la concavité de la courbure locale et la présence d'un point anguleux du contour est caractérisée, si sa courbure est suffisamment accentuée, par la présence d'un maximum local de $\lambda'_2$ en une position proche de celle du centre de courbure, ou du centre de la région si le contour délimite une région de taille suffisamment faible.

On voit ainsi que le point caractéristique déterminé grâce à cet attribut est proche du contour mais extérieur à celui-ci, ce qui permet avantageusement de le distinguer des points de contour proprement dits. La même image peut donc conserver après traitement à la fois les points de contour et les points caractéristiques, ces deux types de points n'étant pas confondus.

Cet attribut est donc parfaitement adapté à la caractérisation et à la localisation ponctuelle de coins et de régions de petite taille dans une image.

*Architecture de mise en oeuvre en temps réel du traitement*

On va maintenant décrire, en référence aux schémas par blocs des figures, une architecture de circuit propre à réaliser un temps réel les traitements du processus exposé ci-dessus.

En effet, les formulations des traitements exposées plus haut ont été choisies en vue de permettre ce traitement en temps réel en tenant compte des cadences très élevées, qui peuvent atteindre jusqu'à 20 MHz pour la cadence de pixel.

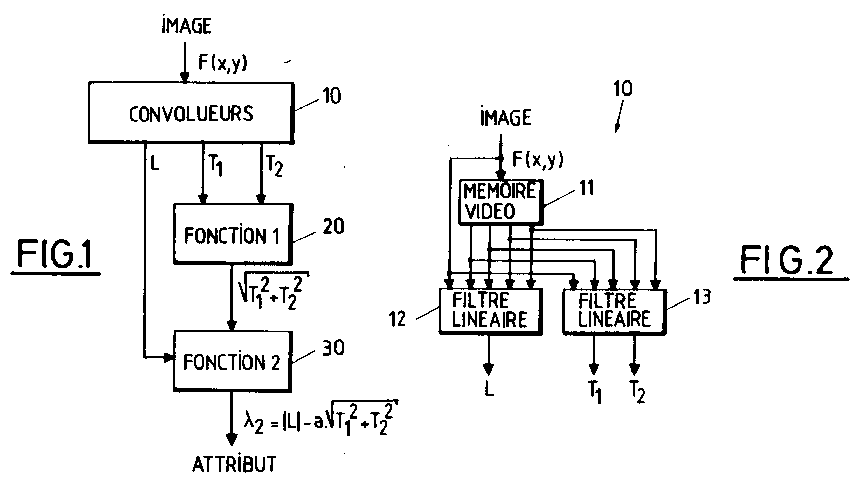

Cette architecture, illustrée schématiquement dans son ensemble figure 1, comporte essentiellement trois blocs.

Le premier bloc, référencé 10, exécute à partir de la fonction de niveau de gris F(x,y) reçue en entrée à la cadence de l'image vidéo les trois convolutions :

$L(x,y) = (F * G) (x,y)$,

$T_1(x,y) = (F * T_{1G}) (x,y)$, et

$T_2(x,y) = (F * T_{2G}) (x,y)$

Le second bloc, référencé 20, est un bloc permettant de calculer, à partir de deux valeurs x et y en entrée, la moyenne quadratique $(x^2+y^2)^{\frac{1}{2}}$ de ces deux valeurs ; ces deux valeurs x et y seront ici les résultats de convolution $T_1$ et $T_2$ délivrés par le convolueur 10.

Le troisième bloc de fonction, référencé 30, est un bloc permettant de calculer, à partir de deux valeurs x et y, le terme $|x|$ -a.y, a étant une constante ; ces deux termes x et y seront ici, respectivement, le résultat de convolution L délivré par le circuit 10 et la moyenne quadratique $(T_1^2+T_2^2)^{\frac{1}{2}}$, délivrée par le premier circuit de fonction 20.

Le résultat délivré par ce circuit 30 est donc:

$$|L| - a.[(T_1^2 + T_2^2)^{\frac{1}{2}}]$$

c'est-à-dire l'attribut $\lambda'_2$ explicité plus haut.

On va maintenant décrire en détail chacun des blocs.

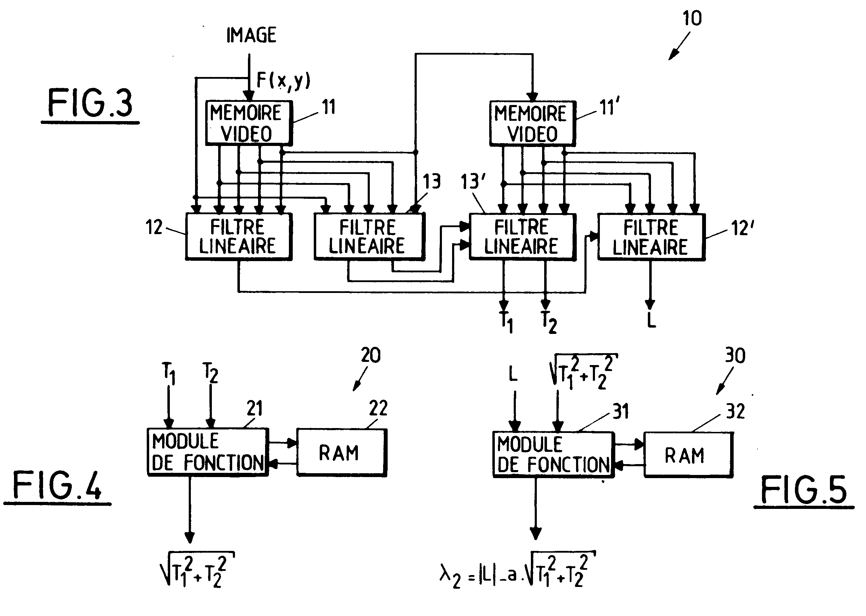

Le bloc 10 exécutant la convolution a été représenté sur les figures 2 et 3 sous deux formes différentes.

Ce circuit, dans l'une ou l'autre de ses formes, est réalisé à partir de deux circuits universels VLSI développés dans le cadre du programme européen EURÊKA « MIP » n° EU34 : *Modular Image Processing*), à savoir les circuits *Video Memory* (fonction mémoire) et *Linear Filter* (filtre linéaire).

Le circuit MIP *Video Memory* est un circuit mémoire destiné à l'agencement des données pour le circuit MIP *Linear Filter*. Il permet de mémoriser quatre lignes vidéo de 1024 pixels chacune (taille maximale), chaque pixel pouvant être codé sur 8 bits de niveau de gris. Il peut ainsi délivrer, à la cadence vidéo, une colonne de cinq pixels (les quatre pixels mémorisés plus le pixel courant) à un filtre linéaire placé en aval.

La longueur des lignes est programmable par commande externe, avec une taille maximale de 1024 pixels.

Quant au circuit MIP *Linear Filter* (filtre linéaire), il s'agit d'un circuit dédié permettant d'effectuer la convolution d'une image E avec un masque K, conformément à la relation:

$$C(n,m) = \Sigma E(n + l,m + j) . K(i,j)$$

Ce circuit présente les caractéristiques fonctionnelles suivantes :

– voisinage de traitement : 5 x 10,

– deux modes de fonctionnement possibles : mode « réel » (convolution unique) et mode « complexe » (deux convolutions simultanées avec deux masques différents),
– format vidéo programmable (retour ligne, retour trame),
– cadence vidéo maximale: 20 MHz,
– entrée : 5 pixels de 8 bits,
– sortie : 16 bits (en mode réel) ou 24 bits (en mode complexe),
– possibilité de post-traitements intégrés :
. ajustement des sorties par une transformation du type:

$$S(n,m) = a \cdot C(n,m) \cdot 2^b + c,$$

avec a, b et c programmables,
. seuillage : les valeurs inférieures à un seuil donné peuvent être forcées à zéro, les valeurs supérieures étant conservées en l'état, ou forcées à 1 selon le mode de seuillage,
. calcul d'histogramme, et
. recherche du minimum et du maximum sur les valeurs résultats.

Dans la première architecture envisagée pour la mise en oeuvre de l'invention, illustrée figure 2, le circuit convolueur 10 comporte une mémoire vidéo 11 alimentant en parallèle deux filtres linéaires 12 et 13.

Le premier filtre linéaire 12 opère en mode réel et permet le calcul du laplacien L. Le filtre linéaire 12 opère en mode complexe (deux convolutions simultanées avec des masques différents) et délivre en sortie parallèlement $T_1$ et $T_2$. Les coefficients du masque sont appliqués aux filtres linéaires par une commande externe (non symbolisée), en même temps que les autres commandes de paramétrage de ce circuit.

Cette architecture est relativement simple du point de vue du nombre de circuits utilisés, mais on peut noter que son emploi est très limité en raison de la taille réduite (5 x 5) des noyaux de convolution utilisables.

Dans le cas de la figure 3, on a associé en cascade deux mémoires vidéo 11 et 11′ de manière à disposer d'un voisinage 9 x 9 (la ligne courante, plus les huit lignes précédentes, chargées dans les mémoires 11 et 11′), procurant ainsi un noyau de convolution plus large.

De la même façon, on met en cascade deux groupes de deux filtres linéaires 12, 12′ (calcul du laplacien) et 13, 13′ (calcul de $T_1$ et $T_2$).

Les deux blocs de fonction 20 et 30, illustrés isolément figures 4 et 5, ont une architecture semblable.

Les opérations non linéaires qu'ils impliquent peuvent être effectuées intégralement par deux circuits MIP du type *Function Module* (module de fonction) 21, 31 associés à des RAMs respectives 22, 32. En effet, le module MIP *Function Module* permet d'approximer à la cadence vidéo toute fonction continue à deux variables.

A cet effet, la RAM qui lui est associée contient les valeurs de la fonction sur un échantillonnage de points $(X_i, Y_j)$, avec $0 \leq i \leq I$ et $0 + \leq j \leq J$. Le module de fonction détermine pour $(X,Y)$ la valeur de la fonction par une interpolation bilinéaire ou linéaire.

Ses caractéristiques sont les suivantes:
– stockage des valeurs de la fonction sur une grille 128 x 128,
– cadence vidéo maximale: 20 MHz,
– entrées: 2 x 12 bits,
– sortie : 12 bits.

Des signaux de commande externes (non symbolisés) permettent de charger dans les RAMs respectives 22, 32 les valeurs de la fonction non linéaire que l'on veut réaliser (fonction $(x^2+y^2)^{\frac{1}{2}}$ dans le cas du circuit 20, fonction $|x|$ —a.y dans le cadre du circuit 30).

## Revendications

1. Un procédé pour caractériser et localiser des points caractéristiques d'une image numérisée, notamment pour la reconnaissance de formes dans un traitement d'analyse de scène, ces points caractéristiques étant des points de contour à forte courbure tels que des coins ou des régions de petite taille, ladite image étant formée d'une trame bidimensionnelle de pixels présentant chacun un niveau de gris déterminé,
procédé caractérisé en ce qu'il comprend les étapes consistant à :
(a) approximer, pour chaque pixel à analyser, les dérivées partielles d'ordre 2 de la fonction de niveau de gris de l'image (F(x,y)),
(b) déterminer à partir de ces dérivées un attribut ($\lambda_2$) représentatif de la caractéristique recherchée et affecter cet attribut au pixel ainsi analysé, et
(c) rechercher parmi les pixels de l'image ainsi analysés les points maximisant ledit attribut.

2. Le procédé de la revendication 1, dans lequel ladite approximation est réalisée en convoluant la fonction de niveau de gris de l'image (F(x,y)) avec des fonctions correspondant aux dérivées partielles d'ordre 2 d'une fonction de régularisation, cette fonction de régularisation permettant d'atténuer le bruit présent dans l'image.

3. Le procédé de l'une des revendications 1 ou 2, dans lequel ledit attribut ($\lambda_2$) est la seconde valeur propre de la matrice des dérivées secondes:
$$\lambda_2(x,y) = \left| F_{xx} + F_{xy} \right| - [(F_{xx} - F_{yy})^2 + 4.F_{xy}^2]^{\frac{1}{2}},$$
avec:
$F_{xx}(x,y) = \partial^2 F / \partial x^2$,
$F_{yy}(x,y) = \partial^2 F / \partial y$, et
$F_{xy}(x,y) = \partial^2 F / \partial x \partial y$.

4. Le procédé de la revendication 2, dans lequel ladite fonction de régularisation est une fonction gaussienne.

5. Le procédé de la revendication 2, dans lequel ladite fonction de régularisation est une fonction gaussienne centrée:
$$G(x,y) = (2.\pi. \left| \Sigma \right|^{\frac{1}{2}})^{-1}.exp\ [-1/2.(x,y).\Sigma^{-1}.(x,y)^t],$$
$\Sigma$ étant la matrice de covariance de la fonction gaussienne.

6. Un dispositif de caractérisation et de localisation de points caractéristiques d'une image numérisée, notamment pour la reconnaissance de formes dans un traitement d'analyse de scène, ces points caractéristiques étant des points de contour à forte courbure tels que des coins ou régions de petite taille, ladite image étant formée d'une trame bidimensionnelle de pixels présentant chacun un niveau de gris déterminé,
dispositif caractérisé en ce qu'il comprend:
– des moyens dérivateurs (10) approximant, pour chaque pixel à analyser, les dérivées partielles d'ordre 2 de la fonction de niveau de gris de l'image (F(x,y))
– des moyens caractérisateurs (23, 30), déterminant à partir de ces dérivées un attribut ($\lambda_2$) représentatif de la caractéristique recherchée et affectant cet attribut au pixel ainsi analysé, et
– des moyens localisateurs, recherchant parmi les pixels de l'image ainsi analysés les points maximisant ledit attribut.

7. Le dispositif de la revendication 6, dans lequel les moyens dérivateurs (10) comprennent des moyens convolueurs effectuant une convolution de la fonction de niveau de gris de l'image (F(x,y)) avec des fonctions correspondant aux dérivées partielles d'ordre 2 d'une fonction de régularisation, cette fonction de régularisation permettant d'atténuer le bruit présent dans l'image.

8. Le dispositif de l'une des revendications 6 ou 7, dans lequel la caractérisation et la localisation des points caractéristiques sont opérées en temps réel à la cadence vidéo.

EP 0 469 986 A1

IMAGE

$F(x,y)$

| CONVOLUEURS | 10 |

L    $T_1$    $T_2$

| FONCTION 1 | 20 |

$\sqrt{T_1^2 + T_2^2}$

| FONCTION 2 | 30 |

$\lambda_2 = |L| - a.\sqrt{T_1^2 + T_2^2}$

ATTRIBUT

## FIG.1

IMAGE

10

$F(x,y)$

| MEMOIRE VIDEO | 11 |

| FILTRE LINEAIRE | FILTRE LINEAIRE | 13 |

12

L

$T_1$    $T_2$

## FIG.2

EP 0 469 986 A1

## FIG.3

IMAGE

$F(x,y)$

MEMOIRE VIDEO — 11

MEMOIRE VIDEO — 11'

10

FILTRE LINEAIRE 12

FILTRE LINEAIRE

13

13'

FILTRE LINEAIRE

FILTRE LINEAIRE — 12'

$T_1$   $T_2$

L

## FIG.4

$T_1$   $T_2$

20

MODULE DE FONCTION — 21

22

RAM

$$\sqrt{T_1^2 + T_2^2}$$

## FIG.5

L   $\sqrt{T_1^2 + T_2^2}$

30

MODULE DE FONCTION — 31

32

RAM

$$\lambda_2 = |L| - a \cdot \sqrt{T_1^2 + T_2^2}$$

EP 0 469 986 A1

**Office européen des brevets**

# RAPPORT DE RECHERCHE EUROPEENNE

Numero de la demande

EP    91 40 2127

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5 ) |
|---|---|---|---|
| Y | IEEE INTERNATIONAL CONFERENCE ON NEURAL NETWORKS 24 juillet 1988, SAN DIEGO, CALIFORNIA pages 71 - 78; ZHOU ET AL.: "COMPUTATION OF OPTICAL FLOW USING A NEURAL NETWORK" * abrégé * * page 73, ligne 36 - page 74, ligne 27 * | 1-3 | G06F15/70 G06F15/68 G06K9/46 |
| Y | COMPUTER VISION GRAPHICS AND IMAGE PROCESSING. vol. 21, no. 1, janvier 1983, NEW YORK US pages 85 - 117; NAGEL: "DISPLACEMENT VECTORS DERIVED FROM SECOND-ORDER INTENSITY VARIATIONS IN IMAGE SEQUENCES" * page 86, ligne 38 - page 92, ligne 24; figure 3 * | 1, 3 | |
| Y | 1988 IEEE INTERNATIONAL CONFERENCE ON ROBOTICS AND AUTOMATION 24 avril 1988, PHILADELPHIA, PENNSYLVANIA pages 1554 - 1559; I. MASAKI: "REAL-TIME MULTI-SPECTRAL VISUAL PROCESSOR" * page 1555, colonne 1, ligne 41 - colonne 2, ligne 47 * | 2 | |
| A | COMPUTER VISION GRAPHICS AND IMAGE PROCESSING. vol. 33, no. 1, janvier 1986, NEW YORK US pages 33 - 80; BESL ET AL.: "INVARIANT SURFACE CHARACTERISTICS FOR 3D OBJECT RECOGNITION IN RANGE IMAGES" * page 41, ligne 44 - page 48, ligne 26; figure 4 * | 1-8 | **DOMAINES TECHNIQUES RECHERCHES (Int. Cl.5 )** <br><br> G06K <br> G06F |

Le présent rapport a été établi pour toutes les revendications

| Lieu de la recherche | Date d'achèvement de la recherche | Examinateur |
|---|---|---|
| BERLIN | 07 NOVEMBRE 1991 | MATERNE, A |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P0402)

10